# EUROPÄISCHE PATENTANMELDUNG

(11) **EP 1 892 520 A1**
(43) Veröffentlichungstag der Anmeldung: **27.02.2008**
(21) Anmeldenummer: 07108359.6
(22) Anmeldetag: 16.05.2007
(51) Int. Cl.: G01N 21/27

(54) **Messvorrichtung zur Inhaltsstofferfassung**

(30) Priorität: 31.07.2006 DE 102006035906
(71) Anmelder: CLAAS Selbstfahrende Erntemaschinen GmbH, 33428 Harsewinkel (DE)
(72) Erfinder: Bühlmeier, Robert, 33442, Herzebrock-Clarholz (DE); Claussen, Frank, 33428 Harsewinkel (DE); Pfitzner, Christian, 06493, Harzgerode (DE); Heinrich, André, 04668, Otterwisch (DE); Günther, Andi, 01187, Dresden (DE)

(57) **Zusammenfassung**

Die Erfindung betrifft eine Messvorrichtung (14) mit einem Sensor (16) zur Erfassung wenigstens eines Inhaltsstoffes und/oder wenigstens einer Eigenschaften eines mit dem Sensor (16) untersuchten Materials (4), wobei der Sensor (16) zumindest eine Beleuchtungsquelle (18) aufweist, die wenigstens einen Lichtstrahl (20) auf das zu untersuchende Material (4) richtet und wobei die Messvorrichtung (14) wenigstens ein Referenzobjekt (34, 32, 33) zur Kalibrierung der Messvorrichtung (14) aufweist, wobei ein Teil des Lichtstrahls (20) auf das Referenzobjekt (32, 33, 34) umgelenkt wird, so dass ein Austausch des untersuchten Materials und des Referenzobjektes gegeneinander entfällt

## Beschreibung

Die Erfindung betrifft eine Messvorrichtung mit einem Sensor zur Erfassung wenigstens eines Inhaltsstoffes und/oder wenigstens einer Eigenschaft eines mit dem Sensor untersuchten Materials nach dem Oberbegriff des Anspruchs 1.

Aus der DE 10 2004 021 448.4 ist ein spektrometrischer Reflexionsmesskopf mit interner Rekalibrierung bekannt. In dem Gehäuse des Messkopfes sind zwei Standards, vorzugsweise ein Schwarz- und ein Weißstandard zur internen Rekalibrierung vorhanden, die wahlweise in den Strahlengang des Reflexionsmesskopfes geschwenkt werden können. Nach der Erfassung der Messdaten beider Standards durch das Spektrometer erfolgt die Rekalibrierung des Reflexionsmesskopfes durch die Steuer- und Auswerteeinheit. Zusätzlich können zur Kalibrierung des Reflexionsmesskopfes vor der Inbetriebnahme der Messanordnung beziehungsweise in bestimmten Zeitabständen mindestens zwei externe Standards vorhanden sein, die an die Stelle des Messobjekts in dem Strahlengang der Beleuchtungsquelle angeordnet werden.

Nachteilig bei diesem bekannten Reflexionskopf ist, dass die Standards zur Kalibrierung der Messanordnung in den Bereich des Strahlengangs verschwenkt werden müssen. Diese erfordert einerseits einen konstruktiv aufwendigen Verschwenkmechanismus und zum anderen muss die Stoffstromdetektion während des Kalibriervorgangs unterbrochen werden.

Aus der EP 1 053 463 B1 ist ein Mähdrescher mit einem System zur Bestimmung von Bestandteilen eines landwirtschaftlichen Gutes bekannt. Das System weist eine Lichtquelle auf, die das landwirtschaftliche Erntegut bestrahlt und einen Aufnehmer zum Empfang der von dem Erntegut refelektierenden Lichtenergie auf. Um das System zu Kalibrieren wird über einen Motor ein Standard vor den Aufnehmer geschwenkt und Bezugsmessung durchgeführt. Auch bei diesem System besteht der Nachteil, dass ein konstruktiv aufwendiger Verschwenkmechanismus erforderlich ist und dass die Erntegutdetektion während des Kalibriervorgangs unterbrochen werden muss.

Der vorliegenden Erfindung liegt daher die Aufgabe zugrunde, die Nachteile des Standes der Technik zu vermeiden und insbesondere eine einfache und daher kostengünstige Messvorrichtung vorzuschlagen, bei der ein Austausch des untersuchten Materials und des Referenzobjektes gegeneinander entfällt.

Diese Aufgabe wird erfindungsgemäß durch die kennzeichnenden Merkmale der Anspruchs 1 gelöst. Weitere vorteilhafte Wirkungen des Erfindungsgegenstandes ergeben sich aus den Unteransprüchen.

Indem ein Teil des Lichtstrahls der Beleuchtungsquelle auf das Referenzobjekt umgelenkt wird, wird keine Mechanik, die das untersuchte Material gegen das Referenzobjekt austauscht, benötigt, zudem erfolgt die Stoffstrommessung annähernd kontinuierlich, da die Zeit für das Verschwenken entfällt.

In einer ersten erfindungsgemäßen Ausführungsform der Messvorrichtung wird der Lichtstrahl der Beleuchtungsquelle teilweise durch wenigstens einen Reflektor umgelenkt, so dass sich eine einfache, kostengünstige Messvorrichtung ergibt.

In einer weiteren erfindungsgemäßen Ausführung der Messvorrichtung wird der Lichtstrahl der Beleuchtungsquelle durch wenigstens ein Prisma umgelenkt, wodurch sich ebenfalls eine baulich einfache, kostengünstige Messvorrichtung ergibt.

In einer dritten erfindungsgemäßen Ausführung der Messvorrichtung wird der Lichtstrahl der Beleuchtungsquelle teilweise durch einen Lichtleiter geführt umgelenkt, wodurch eine beliebige Anordnung des Referenzobjektes zur Beleuchtungsquelle ohne aufwendigen baulichen Aufwand möglich ist.

Dadurch, dass das untersuchte Material und/oder das Referenzobjekt den Lichtstrahl der Beleuchtungsquelle reflektieren und das vom dem Material und/oder dem Referenzobjekt diffus reflektierte Licht über wenigstens einen Lichtleiter aufgenommen wird und wobei die Lichtleiter das diffus reflektierte Licht zu einem Spektrometer führen, ist eine beliebige Lage des Spektrometers an der Erntemaschine möglich. Zudem können weitere Lichtleiter weiterer Messvorrichtungen auf der Erntemaschine mit dem Spektrometer verbunden sein.

Indem das Referenzobjekt einen Schwarzstandard und einen Weißstandard aufweist, können sowohl die schwankende Lichtintensität der Beleuchtungsquelle als auch die Änderung der Empfindlichkeit der Messvorrichtung bei der Kalibrierung berücksichtigt werden und dadurch Messwertverfälschungen vermieden werden.

Dadurch, dass dem Spektrometer ein Multiplexer vorgeschaltet ist, wobei der Multiplexer steuert, welcher Lichtleiter das Licht an das Spektrometer übermittelt, kann eine automatische Umschaltung zwischen Messbetrieb und Kalibrierung der Messvorrichtung erfolgen, wobei die Kalibrierung innerhalb von Millisekunden erfolgt.

Indem das Spektrometer die Messdaten des von dem untersuchten Material und/oder dem Referenzobjekt diffus reflektierten Lichts erfasst, ist ausgeschlossen das beispielsweise zusätzlich von der zwischen Beleuchtungsquelle und Erntegut angeordneten Scheibe reflektiertes Licht von den Lichtleitern aufgenommen wird, was zu falschen Messdaten führen würde.

Indem das Spektrometer mit einer Steuer- und Auswerteeinheit verbunden ist, wobei die Steuer- und Auswerteeinheit mit den von dem Spektrometer erfassten Messdaten den Gehalt an Inhaltsstoffen und/oder Eigenschaften des untersuchten Materials berechnet, ist eine schnelle, zerstörungsfreie Analyse des untersuchten Materials möglich.

Die Beleuchtungsquelle ist vorteilhafterweise als Infrarotlichtquelle ausgeführt, da Wellenlängen im Nah-Infrarotbereich optimal geeignet sind, um anteilig Inhaltsstoffe wie Eiweiß und dergleichen im untersuchten Material nachzuweisen.

Das untersuchte Material ist vorteilhafterweise ein fließender Strom eines landwirtschaftlichen Produktes, so dass eine kontinuierliche Echtzeitmessung eines kontinuierlich geförderten Erntegutstromes vorgenommen werden kann.

Die Messvorrichtung ist vorteilhafterweise an einer Erntemaschine angeordnet, so dass die Analyse beim Ernten des Erntegutes mit der Erntemaschine durchgeführt wird.

Weitere vorteilhafte Ausgestaltungen sind Gegenstand weiterer Unteransprüche und werden nachfolgend an Hand des in mehreren Figuren dargestellten Ausführungsbeispiels näher erläutert.

Es zeigen:
- Fig.1: einen Feldhäcksler in der Seitenansicht mit einer erfindungsgemäßen Messvorrichtung,
- Fig. 2: eine detaillierte Darstellung der erfindungsgemäßen Messvorrichtung.
- Fig. 3: eine erfindungsgemäße Messvorrichtung mit einem Reflektor zum Umlenken der Lichtstrahlen
- Fig. 4: eine erfindungsgemäße Messvorrichtung mit einem Prisma zum Umlenken der Lichtstrahlen

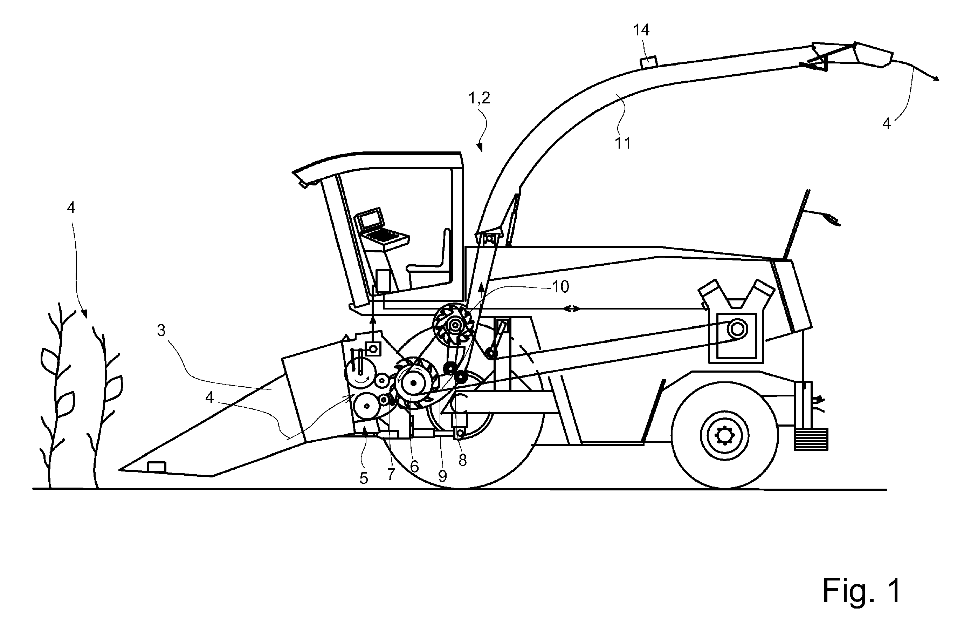

Fig.1 zeigt eine Seitenansicht mit bereichsweiser Schnittdarstellung einer als selbstfahrender Feldhäcksler 1 ausgeführten landwirtschaftliche Erntemaschine 2. Frontseitig ist dem Feldhäcksler 1 ein Vorsatzgerät 3 zugeordnet, welches im Arbeitsbetrieb des Feldhäckslers das Erntegut 4 aufnimmt, schneidet und es den nachgeordneten rotierenden Einzugs- und Vorpresswalzen 5 zuführt. Die Einzugs- und Vorpresswalzen 5 leiten das Erntegut 4 der nachgeordneten und rotierenden Häckseltrommel 6 zu, welche das Erntegut 4 im Zusammenwirken mit einer Gegenschneide 7 zerkleinert. Das zerkleinerte Erntegut 4 wird an eine Nachzerkleinerungsvorrichtung 8 übergeben, die die Erntegutkörner, wie beispielsweise Maiskörner anschlägt und über einen Förderschacht 9 an einen Nachbeschleuniger 10 übergibt. Der Nachbeschleuniger 10 beschleunigt das zerkleinerte Erntegut 4 und fördert es über einen horizontal und vertikal verstellbaren Auswurfkrümmer 11 auf eine nicht dargestellte, dem Auswurfkrümmer 11 zugeordnete Transportvorrichtung.

An dem Auswurfkrümmer 11 ist die erfindungsgemäße und nachfolgend noch näher erläuterte Messvorrichtung 14 zur Analyse des durch den Auswurfkrümmer geförderten Erntegutes 4 angeordnet.
Es ist ebenso denkbar die Messvorrichtung 14 an einem Zuführkanal einer Ballenpresse oder im Schrägförderer oder der Korntankbefüllschnecke eines Mähdreschers anzuordnen.
Die an sich bekannte Messvorrichtung 14 dient zur Bestimmung bestimmter Inhaltsstoffe des Erntegutes 4. Hinsichtlich der näheren Bestimmung der Inhaltsstoffe wird auf die EP 1 053 463 verwiesen, deren Lehre mit Verweis auf diese in diese Offenbarung integriert ist. Die Messvorrichtung 14 erfasst die Anteile der Inhaltsstoffe im Erntegut 4 wie beispielsweise den Wassergehalt, den Rohprotein- oder den Fettgehalt und darüber hinaus weitere Parameter des Erntegutes 4 wie beispielsweise die Faserlänge, den Fasergehalt und die Trockensubstanz.

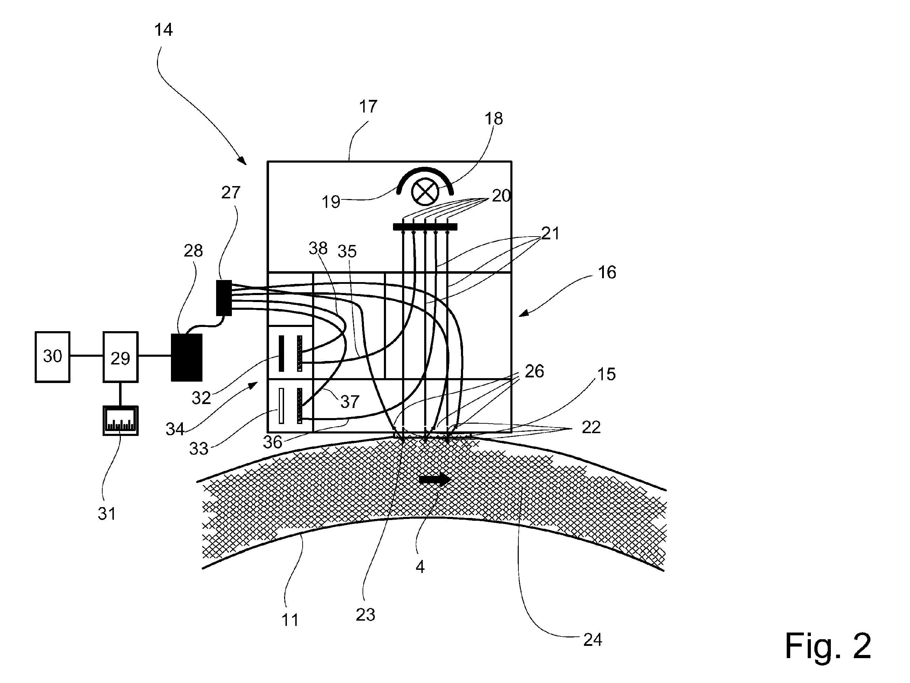

Fig. 2 zeigt ist eine detaillierte Darstellung der an dem Auswurfkrümmer 11 angeordneten erfindungsgemäßen Messvorrichtung 14. In dem Auswurfkrümmer 11 ist eine Öffnung 15 vorgesehen, in deren Bereich die Messvorrichtung 14 angeordnet ist. Die Messvorrichtung 14 umfasst einen Sensor 16, der ein im Reflexionsmodus arbeitender optischer Sensor ist.

Der Sensor 16 weist eine innerhalb eines Gehäuses 17 angeordnete als Infrarotlichtquelle ausgeführte Beleuchtungsquelle 18 auf, die mittels eines oberhalb der Beleuchtungsquelle 18 angeordneten Parabolspiegels 19 einen kollimierten Lichtstrahl 20 nach unten in Richtung des Auswurfkrümmers 11 abstrahlt. Der Lichtstrahl 20 wird teilweise von ebenfalls in dem Gehäuse 17 angeordneten Lichtleitern 21 aufgenommen und in Richtung Auswurfkrümmer 11 geführt. Die am unteren Ende der Lichtleiter 21 austretenden Lichtstrahlen 22 treten durch eine im Bereich der Öffnung des Auswurfkrümmers 11 angeordnete Scheibe 23 des Gehäuses 17 in den Förderkanal 24 des Auswurfkrümmer 11 ein, durch den das Erntegut 4 gefördert wird. Die Lichtstrahlen 22 werden von dem Erntegut 4 diffus reflektiert. Innerhalb des Gehäuses 17 sind weitere Lichtleiter 25 angeordnet, um einen Teil des diffus reflektierten Lichts 26 zu sammeln. Die Enden der Lichtleiter 25 sind im Winkel von etwa 45 Grad zur Scheibe 23 angeordnet, um zu verhindern, dass auch von der Scheibe 23 reflektiertes Licht gesammelt wird.
Die Lichtleiter 25 führen das diffus reflektierte Licht 26 über einen an späterer Stelle noch näher erläuterten Multiplexer 27 zu einem Spektrometer 28. Das Spektrometer 28 erfasst wellenlängenspezifisch das Spektrum des reflektierten Lichts 26 und damit die Reflektivität des angestrahlten Erntegutes 4.
Das Spektrometer 28 ist mit einer Steuer- und Auswerteeinheit 29 verbunden, die mit den vom Spektrometer 28 bereitgestellten Signalen wie in der bereits zuvor erwähnten EP 1053 463 B1 näher beschrieben den Gehalt des Ernteguts 4 an bestimmten Inhaltsstoffen, wie beispielsweise Wasser, Stärke, organische Substanzen, nichtorganische Substanzen, Rohprotein, Öl und dergleichen berechnet, wobei an diese Die berechneten Werte werden an einen Bordcomputer 30 übertragen, der die Werte ortsabhängig kartiert, zusätzlich werden die Werte auf einer Anzeigeeinheit 31 angezeigt.
Innerhalb des Gehäuses 17 ist ein einen Schwarzstandard 32 und einen Weißstandard 33 aufweisendes Referenzobjekt 34 angeordnet, mit dem die Messvorrichtung 14 durch ein Bezugssignal kalibriert werden kann.
Um eine Bezugsmessung durchführen zu können, wird erfindungsgemäß ein Teil des Lichtstrahl 20 der Beleuchtungsquelle 18 auf das Referenzobjekt 31 umgelenkt.

Die Umlenkung erfolgt im dargestellten Ausführungsbeispiel über gebogene Lichtleiter 35, 36 mit jeweils einem ersten zur Beleuchtungsquelle 18 ausgerichteten und einem zweiten zum Weißstandard 33 beziehungsweise Schwarzstandard 32 ausgerichteten Ende. Die Lichtleiter 35, 36 nehmen einen Teil des Lichtstrahles 20 der Beleuchtungsquelle 18 auf und führen das gesammelte Licht den Standards 32, 33 zu.
Das von dem Weißstandard 32 beziehungsweise dem Schwarzstandard 33 diffus reflektierte Licht wird jeweils getrennt über einen ersten Lichtleiter 36 und einen weiteren Lichtleiter 37 gesammelt und dem Multiplexer 27 zugeführt.
Der Multiplexer 27 steuert, ob das reflektierte Licht des Erntegutes 4, welches über die Lichtleiter 21 an den Multiplexer 27 übertragen wird, oder das reflektierte Licht des Weißstandards 33, das über den Lichtleiter 35 an den Multiplexer 27 übertragen wird oder das reflektierte Licht des Schwarzstandard 32, dass von dem Lichtleiter 36 an den Multiplexer 27 übertragen wird, an das Spektrometer 28 weitergeleitet wird.

Vor einer Kalibrierung der Messvorrichtung 14 leitet der Mutiplexer 27 nacheinander das von den Lichtleitern 35 geführte reflektierte Licht des Weißstandard 33 und das von den Lichtleitern 36 geführte Licht des Schwarzstandards 32 an das Spektrometer 28 weiter.
Das Spektrometer 28 gibt die zu den Standards 32, 33 zugehörigen Messdaten an die Steuer- und Auswerteeinheit 29 weiter, die die Messvorrichtung 14 mit Hilfe dieser Messdaten kalibriert.
Beim Bestimmen der Inhaltsstoffe eines Erntegutes 4 leitet der Multiplexer 27 lediglich das reflektierte Licht des Erntegutes 4, welches über die Lichtleiter 21 an den Multiplexer 27 übertragen wird an das Spektrometer 28 weiter.
Die für die Kalibrierung der Messvorrichtung 14 erforderliche Aussetzen der Bestimmung der Inhaltsstoffe des Erntegutes 4 kann vor dem Hintergrund erfolgen, dass die Kalibrierung innerhalb von Millisekunden erfolgt und sich die Inhaltsstoffe des vorbeiströmenden Erntegutes 4 innerhalb dieses kurzen Zeitraumes nicht wesentlich ändern.

Es ist ein weitere, erfindungsgemäße Messvorrichtung 14 möglich, bei der im Unterschied zu der oben beschriebenen Ausführung das von den Lichtleitern 35 geführte reflektierte Licht des Weißstandard 33 und das von den Lichtleitern 36 geführte Licht des Schwarzstandards 32 an einen ersten Spektrometer und das reflektierte Licht des Erntegutes 4 auf einen zweiten Spektrometer geleitet wird. Diese Ausführung hat insbesondere den Vorteil, dass die Untersuchung des Ernteguts 4 auch während der Kalibriermesssungen permanent durchgeführt werden kann, da die Auswertung des reflektierten Lichts der Standards 32, 33 und des erflektierten Lichts des Erntegutes 4 in separaten Spektrometern unabhängig voneinander erfolgen kann.

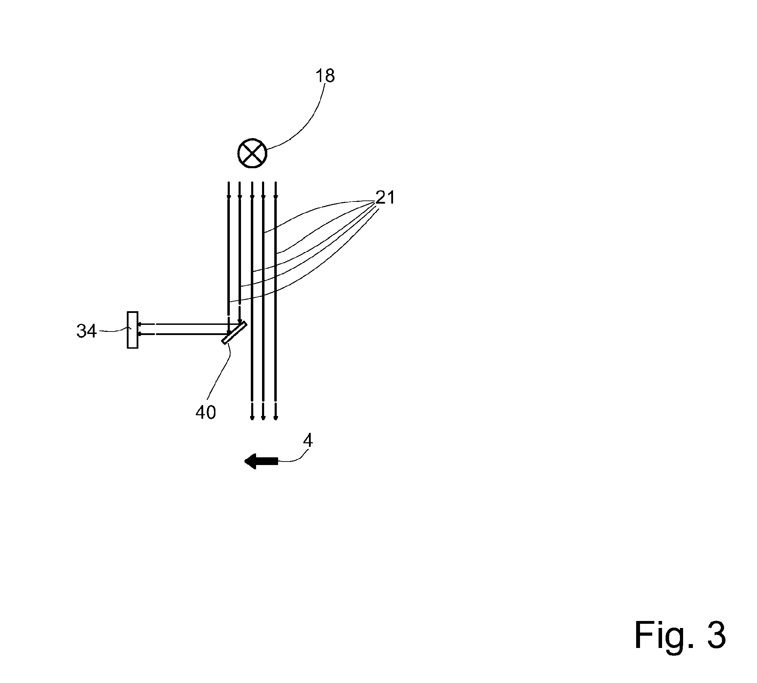

In Fig.3 ist eine erfindungsgemäße Messvorrichtung 14 dargestellt, bei der ein Teil der auf das Erntegut 4 gerichteten Lichtstrahlen 21 der Beleuchtungsquelle 18 auf einen im Winkel zu den Lichtstrahlen 21 angeordneten Reflektor 40 auftreffen und von dem Reflektor 40 auf das Referenzobjekt 34 umgelenkt werden.

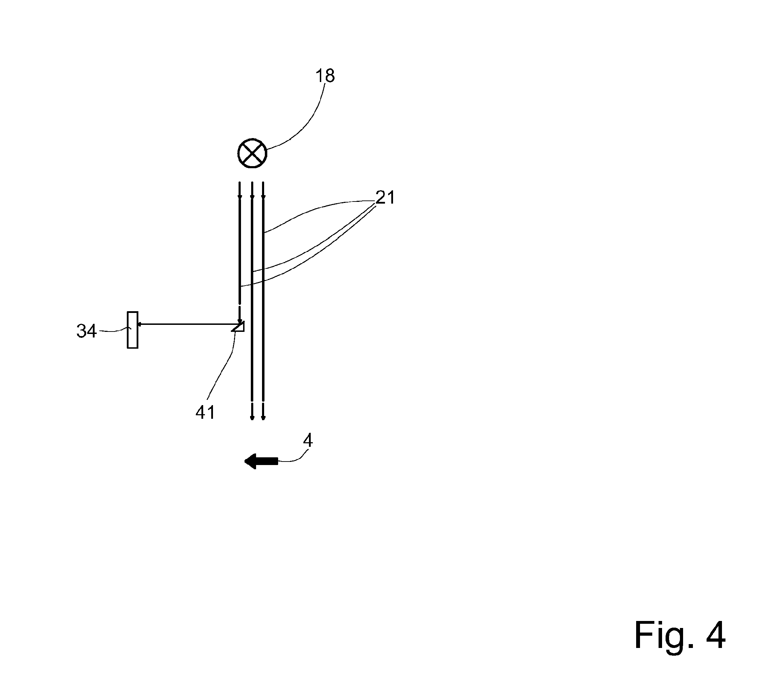

Bei der in Fig.4 dargestellten, erfindungsgemäßen Messvorrichtung 14 trifft ein Teil der auf das Erntegut 4 gerichteten Lichtstrahlen 21 der Beleuchtungsquelle 18 auf ein Prisma 41 und wird von diesem auf das Referenzobjekt 34 umgelenkt.

Es liegt im Rahmen des Könnens eines Fachmannes die beschriebenen Ausführungsbeispiele in nicht dargestellter Weise abzuwandeln oder in anderen Maschinensystemen einzusetzen, um die beschriebenen Effekte zu erzielen, ohne dabei den Rahmen der Erfindung zu verlassen.

### Bezugszeichenliste:

- 1: Feldhäcksler
- 2: Arbeitsmaschine
- 3: Vorsatzgerät
- 4: Erntegut
- 5: Einzugs- und Vorpresswalzen
- 6: Häckseltrommel
- 7: Gegenschneide
- 8: Nachzerkleinerungsvorrichtung
- 9: Förderschacht
- 10: Nachbeschleuniger
- 11: Auswurfkrümmer
- 14: Messvorrichtung
- 15: Öffnung
- 16: Sensor
- 17: Gehäuse
- 18: Beleuchtungsquelle
- 19: Parabolspiegel
- 20: Lichtstrahl
- 21: Lichtleiter
- 22: Lichstrahl
- 23: Scheibe
- 24: Förderkanal
- 25: Lichtleiter
- 26: diffus reflektierte Licht
- 27: Multiplexer
- 28: Spektrometer
- 29: Steuer- und Auswerteeinheit
- 30: Bordcomputer
- 31: Anzeigeeinheit
- 32: Schwarzstandard
- 33: Weißstandard
- 34: Referenzobjekt
- 35: gebogene Lichtleiter
- 36: gebogene Lichtleiter
- 37: Lichtleiter
- 38: Lichtleiter
- 40: Reflektor
- 41: Prisma

## Patentansprüche

1. Messvorrichtung (14) mit einem Sensor (16) zur Erfassung wenigstens eines Inhaltsstoffes und/oder wenigstens einer Eigenschaften eines mit dem Sensor (16) untersuchten Materials (4), wobei der Sensor (16) zumindest eine Beleuchtungsquelle (18) aufweist, die wenigstens einen Lichtstrahl (20) auf das zu untersuchende Material (4) richtet und wobei die Messvorrichtung (14) wenigstens ein Referenzobjekt (34, 32, 33) zur Kalibrierung der Messvorrichtung (14) aufweist,
**dadurch gekennzeichnet,**
**dass** ein Teil des Lichtstrahls (20) der Beleuchtungsquelle (18) auf das Referenzobjekt (32, 33, 34) umgelenkt wird.

2. Messvorrichtung nach Anspruch 1,
**dadurch gekennzeichnet,**
**dass** der Lichtstrahl (20) der Beleuchtungsquelle (18) teilweise durch wenigstens einen Reflektor (40) umgelenkt wird.

3. Messvorrichtung nach wenigstens einem der vorhergehenden Ansprüche,
**dadurch gekennzeichnet,**
**dass** der Lichtstrahl (20) der Beleuchtungsquelle (18) teilweise durch wenigstens ein Prisma (41) umgelenkt wird.

4. Messvorrichtung nach wenigstens einem der vorhergehenden Ansprüche,
**dadurch gekennzeichnet,**
**dass** der Lichtstrahl (20) der Beleuchtungsquelle (18) teilweise durch einen Lichtleiter (35, 36) geführt umgelenkt wird.

5. Messvorrichtung nach wenigstens einem der vorhergehenden Ansprüche,
**dadurch gekennzeichnet,**
**dass** das untersuchte Material (4) und/oder das Referenzobjekt (32, 33, 34) den Lichtstrahl (20) der Beleuchtungsquelle (18) reflektieren und das vom dem Material (4) und/oder dem Referenzobjekt (32, 33, 34) diffus reflektierte Licht über wenigstens einen Lichtleiter (21, 37, 38) aufgenommen wird und wobei die Lichtleiter (21, 37, 38) das diffus reflektierte Licht zu einem Spektrometer (28) führen.

6. Messvorrichtung nach wenigstens einem der vorhergehenden Ansprüche,
**dadurch gekennzeichnet,**
**dass** das Referenzobjekt (34) einen Schwarzstandard (32) und einen Weißstandard (33) aufweist.

7. Messvorrichtung nach wenigstens einem der vorhergehenden Ansprüche,
**dadurch gekennzeichnet,**
**dass** dem Spektrometer (28) ein Multiplexer (27) vorgeschaltet ist, wobei der Multiplexer (27) steuert, welcher Lichtleiter (21, 37, 38) das Licht an das Spektrometer (28) übermittelt.

8. Messvorrichtung nach wenigstens einem der vorhergehenden Ansprüche,
**dadurch gekennzeichnet,**
**dass** das Spektrometer (28) die Messdaten des von dem untersuchten Material (4) und/oder dem Referenzobjekt (32, 33, 34) diffus reflektierten Lichts erfasst.

9. Messvorrichtung nach wenigstens einem der vorhergehenden Ansprüche,
**dadurch gekennzeichnet,**
**dass** das Spektrometer (28) mit einer Steuer- und Auswerteeinheit (29) verbunden ist, wobei die Steuer- und Auswerteeinheit (29) mit den von dem Spektrometer (28) erfassten Messdaten den Gehalt an Inhaltsstoffen und/oder Eigenschaften des untersuchten Materials (4) berechnet.

10. Messvorrichtung nach wenigstens einem der vorhergehenden Ansprüche,
**dadurch gekennzeichnet,**
**dass** die Beleuchtungsquelle (18) eine Infrarotlichtquelle ist.

11. Messvorrichtung nach wenigstens einem der vorhergehenden Ansprüche,
**dadurch gekennzeichnet,**
**dass** das untersuchte Material (4) ein fließender Strom eines landwirtschaftlichen Produktes ist.

12. Messvorrichtung nach wenigstens einem der vorhergehenden Ansprüche,
**dadurch gekennzeichnet,**
**dass** die Messvorrichtung (14) an einer Erntemaschine (1, 2) angeordnet ist.
